# DEMANDE DE BREVET EUROPEEN

(11) **EP 0 994 350 A1**
(43) Date de publication de la demande: **19.04.2000**
(21) Numéro de dépôt: 99420207.5
(22) Date de dépôt: 12.10.1999
(51) Int. Cl.: G01N 31/16, G06K 19/07, G01S 13/74

(54) **Accessoire pour mesure ou dosage, notamment capteur de mesure électrochimique**

(30) Priorité: 15.10.1998 FR 9813087
(71) Demandeur: Radiometer Analytical S.A., 69100 Villeurbanne (FR)
(72) Inventeur: Pauzon, Jean-Jacques, 42000 Saint-Etienne (FR)
(74) Mandataire: Bratel, Gérard

(57) **Abrégé**

L'accessoire pour mesure ou dosage (1,7) comporte une "étiquette électronique" (8, 8') contenant dans sa mémoire des paramètres caractéristiques d'étalonnage de cet accessoire. Le contenu de la mémoire est interrogeable sans contact, par liaison radio (13, 13'), depuis un convertisseur de mesure (4) ou autre contrôleur incluant un transmetteur (11).

L'invention s'applique notamment aux mesures électrochimiques, ledit accessoire étant un capteur de mesure électrochimique (1) ou une solution d'étalonnage (7).

## Description

La présente invention concerne, de façon générale, le domaine de la mesure et du dosage, et elle a pour objet, plus particulièrement, un accessoire pour mesure ou dosage, chimique ou électrochimique, tel que notamment (mais non exclusivement) un capteur de mesure électrochimique.

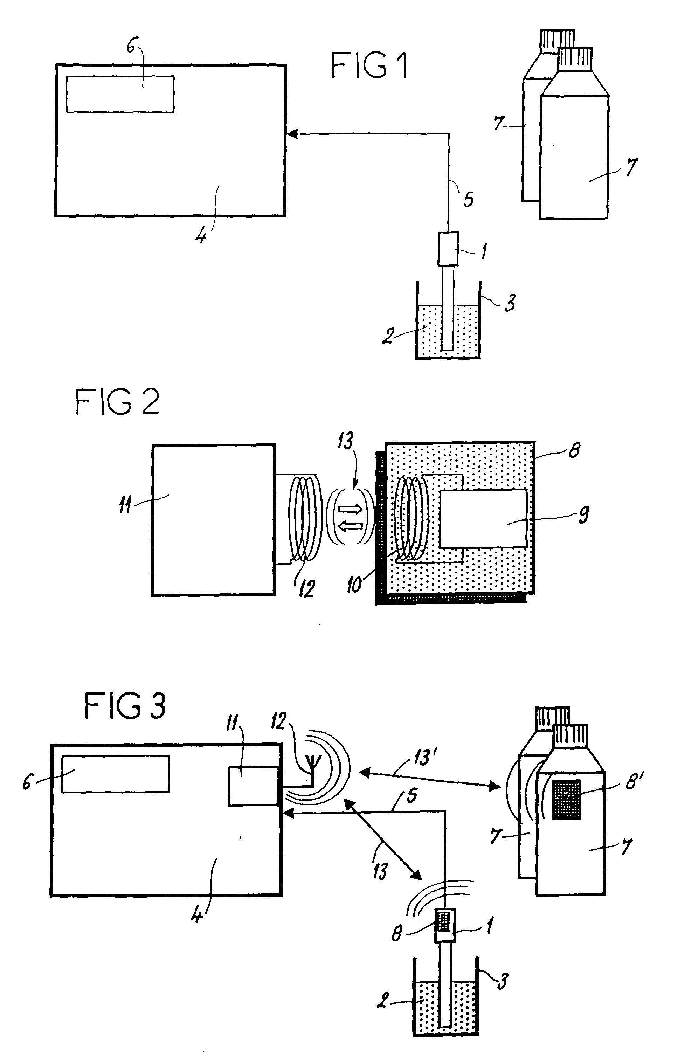

Une chaîne de mesure électrochimique, par exemple de mesure du pH d'un milieu, comprend trois éléments principaux, comme illustré sur la figure 1 du dessin schématique annexé :
- un capteur de mesure électrochimique 1, mis au contact du milieu 2 contenu dans un récipient de mesure 3 ;
- un convertisseur de mesure 4, raccordé en cours de mesure par une liaison électrique 5 au capteur de mesure électrochimique 1, et comportant des moyens d'affichage 6 du paramètre électrochimique mesuré, tel que le pH du milieu 2 ;
- des solutions d'étalonnage 7, de caractéristiques précises et connues, servant de références.

Le convertisseur de mesure 4 calcule la valeur du paramètre électrochimique à mesurer, en appliquant un algorithme approprié à la valeur du signal électrique délivré par le capteur 1, et transmis sur la liaison 5. Cet algorithme utilise une série de paramètres caractéristiques du capteur 1, dits paramètres d'étalonnage. Ces paramètres sont obtenus lors de l'étalonnage, en plongeant le capteur 1 dans une, deux ou plusieurs solutions d'étalonnage 7, suivant le type de mesure électrochimique effectuée.

Le schéma donné par la figure 1 s'applique notamment aux mesures électrochimiques suivantes :
- Mesure de pH : le capteur 1 est constitué d'une électrode à membrane de verre sensible au pH, combinée avec une électrode de référence qui, elle, est insensible au pH. Ce type de capteur nécessite des étalonnages relativement fréquents, surtout si les mesures sont réalisées dans des milieux difficiles, conduisant à un encrassement rapide.
- lonométrie : diverses électrodes sélectives, sensibles à d'autres types d'ions que H⁺, sont aussi utilisées de manière analogue à l'électrode sensible au pH citée précédemment. Ces électrodes doivent être étalonnées à l'aide de plusieurs solutions d'étalonnage.
- Conductimétrie : la conductivité électrique du milieu, en général une solution, est déterminée par la mesure de la résistance électrique entre deux électrodes métalliques plongées dans cette solution. Une technique particulière, utilisant quatre électrodes, permet, dans certaines conditions, d'obtenir des résultats plus précis. Quel que soit le type de sonde (à deux, trois ou quatre électrodes), celle-ci doit être étalonnée à l'aide d'une solution d'étalonnage, afin de déterminer la constante qui permet de convertir la valeur de résistance mesurée en une valeur de conductivité.
- On peut également citer les capteurs dont le principe de fonctionnement est basé sur l'exploitation des relations courant/tension/temps, à l'interface entre un matériau conducteur ou semiconducteur constitutif du capteur, et la solution de mesure. De nombreux biocapteurs sont conçus selon ce principe.

Dans tous les cas, les paramètres d'étalonnage sont actuellement stockés dans la mémoire électronique du convertisseur de mesure 4. Par conséquent, dès que le capteur 1 est séparé du convertisseur de mesure 4 avec lequel il a été étalonné, ce capteur devient inutilisable, et l'utilisation d'un autre convertisseur implique un nouvel étalonnage. Ainsi, en pratique, on ne peut ni détacher un capteur de son convertisseur de mesure, ni substituer un capteur à un autre sur un convertisseur donné. Les systèmes actuels, tels que rappelés ci-dessus, possèdent donc une flexibilité très limitée.

La présente invention vise à éviter ces inconvénients, en fournissant un capteur de mesure électrochimique, ou autre accessoire analogue pour mesure ou dosage, qui soit perfectionné de manière à ne plus être lié obligatoirement au seul convertisseur de mesure utilisé pour son étalonnage, et qui puisse donc être utilisé aussi avec un autre convertisseur approprié.

A cet effet, l'invention a essentiellement pour objet un accessoire pour mesure ou dosage, chimique ou électrochimique, qui comporte une "étiquette électronique" contenant dans sa mémoire des paramètres caractéristiques d'étalonnage de cet accessoire, le contenu de cette mémoire étant interrogeable sans contact, par liaison radio, depuis un convertisseur de mesure ou autre contrôleur incluant un transmetteur.

Un tel accessoire est notamment un capteur de mesure électrochimique, auquel cas, conformément à l'invention, l'étiquette électronique est intégrée ou attachée au corps du capteur de mesure électrochimique et contient, dans sa mémoire, les paramètres d'étalonnage de ce capteur de mesure électrochimique.

Ainsi l'idée inventive consiste à associer, au capteur lui-même, une mémoire électronique de taille suffisante pour contenir les paramètres d'étalonnage du capteur, l'accès à cette mémoire étant possible à partir d'un convertisseur de mesure équipé d'un transmetteur. Une fois l'étalonnage effectué, le convertisseur de mesure alors utilisé pourra inscrire les paramètres d'étalonnage dans la mémoire du capteur. Ensuite, des mesures pourront être effectuées avec ce capteur, en utilisant n'importe quel autre convertisseur capable de "lire" les paramètres d'étalonnage dans la mémoire du capteur. Ledit capteur n'est donc plus lié au seul convertisseur utilisé pour son étalonnage.

Comme on le comprend aisément, l'invention procure ainsi une grande flexibilité, tout en garantissant la précision des mesures puisque chaque convertisseur s 'adapte aux paramètres d'étalonnage, lesquels peuvent varier d'un capteur à un autre. De plus, la conception, objet de l'invention, permet de créer de nouveaux produits adaptés, comprenant :
- des stations d'étalonnage plus ou moins automatisées, réalisant l'étalonnage des capteurs et chargeant dans la mémoire de ces derniers leurs paramètres caractéristiques ;
- des convertisseurs de mesure, utilisant les valeurs des paramètres d'étalonnage contenues dans la mémoire du capteur mis en oeuvre, et établissant la valeur du paramètre mesuré à l'aide de ce capteur sur une solution, ou autre échantillon.

Ces deux fonctions pourront être regroupées sur un seul et même appareil.

La mise en oeuvre de l'invention implique l'utilisation d'étiquettes électroniques, qui sont des composants actuellement de plus en plus utilisés dans les domaines de la vente et de la protection des biens (en tant que moyens antivol), du contrôle d'accès, etc... Ces dispositifs communément désignés par le sigle RFID ("pour l'expression anglaise "Radio Frequency iDentifier"), permettent la détection et l'identification d'un objet, à distance plus ou moins grande et sans contact mécanique ou électrique, à l'aide d'une simple liaison radio. La figure 2 schématise le principe d'une telle étiquette électronique désignée dans son ensemble par le repère 8, qui comprend en particulier une mémoire 9, ainsi qu'une antenne 10. Cette étiquette électronique 8 est utilisée en combinaison avec un transmetteur 11, lui aussi pourvu d'une antenne 12, la liaison radio bidirectionnelle qui s'établit entre l'étiquette électronique 8 et le transmetteur 11 étant symbolisée en 13 par une double flèche. Plus particulièrement, il existe désormais des étiquettes électroniques dites passives, pour lesquelles l'énergie de l'onde radio en provenance du transmetteur 11 suffit à l'alimentation électrique de l'étiquette 8, rendant ainsi inutile toute source d'énergie particulière pour cette étiquette. Des étiquettes électroniques réinscriptibles sont aussi disponibles ; par exemple, des étiquettes électroniques à lecture/écriture, d'une capacité de mémoire de 2 kilobits sur une surface de 1 cm² , sont actuellement disponibles, pour un coût modique.

L'idée inventive, appliquée à un capteur de mesure électrochimique, consiste donc à intégrer ou attacher au corps d'un tel capteur, une étiquette électronique du genre expliqué ci-dessus, qui constituera ainsi la mémoire du capteur dans laquelle sont aptes à être stockés les paramètres d'étalonnage du capteur. Une fois étalonné, ce capteur peut être utilisé avec n'importe quel convertisseur de mesure capable de "lire" le contenu de l'étiquette électronique, ce qui signifie qu'un transmetteur approprié est intégré au convertisseur de mesure.

Compte tenu de sa capacité, la mémoire de l'étiquette électronique peut contenir, outre les paramètres d'étalonnage de capteur de mesure, d'autres informations telles que : paramètres de production, paramètres de contrôle, historique d'étalonnage, etc.., qui caractérisent la "vie" du capteur.

Les paramètres de production peuvent être notamment : le type de capteur, le numéro de lot, la date de fabrication.

Les paramètres de contrôle sont, par exemple : la pente et l'ordonnée à l'origine (dans le cas d'un capteur avec électrode à réponse linéaire), le potentiel de référence, la date du prochain contrôle.

La mémorisation de l'historique d'étalonnage consiste à conserver l'enregistrement des n derniers étalonnages (le nombre n dépendant de la capacité de mémoire disponible pour cette fonction), cet enregistrement comprenant : pente, ordonnée à l'origine, temps de réponse, date d'étalonnage, date prévue pour le prochain étalonnage. A partir de ces données, le convertisseur de mesure pourra calculer la date optimale pour le prochain étalonnage, ou bien recommander une intervention d'entretien, ou encore le remplacement du capteur.

Compte tenu de l'utilisation habituelle de solutions d'étalonnage, comme expliqué plus haut avec référence à la figure 1, l'invention est aussi avantageusement applicable à un accessoire de mesure constitué par une solution d'étalonnage contenue dans un récipient, auquel cas l'étiquette électronique est intégrée ou attachée au récipient et contient, dans sa mémoire, des informations relatives à la solution d'étalonnage telles que :
- paramètres de production : type, numéro de lot, date de fabrication ;
- données de traçabilité : identification de la solution étalon primaire ;
- paramètres de contrôle : valeur exacte et niveau d'incertitude, date de limite de validité ;
- historique d'utilisation : date de première utilisation, dates d'utilisation.

Ainsi "étiquetée", la solution d'étalonnage est utilisable en association avec un capteur de mesure électrochimique pourvu d'une étiquette électronique, tel que défini ci-dessus, et avec un convertisseur de mesure incluant un transmetteur apte à "interroger" aussi bien le capteur de mesure que la solution d'étalonnage. On obtient, de la sorte, un système de mesure électrochimique complet et cohérent, très sûr d'utilisation, procurant à divers titres une amélioration notable de la métrologie :
- Les opérations d'étalonnage peuvent être complètement automatisées, dans les versions les plus évoluées du système. Dans des versions plus simples, l'opérateur peut être guidé pas à pas dans une suite d'actions manuelles simples, tandis que tous les transferts de données sont réalisés automatiquement.
- L'utilisation de l'étiquette électronique apporte une amélioration significative de la sûreté des mesures, en assistant l'utilisateur dans l'application des règles de "Bonne Pratique de Laboratoire". En particulier, du fait que le capteur de mesure électrochimique conserve dans sa mémoire tous ses paramètres, le risque d'erreur dû à un étalonnage erroné du convertisseur de mesure est éliminé.
- De plus, d'une façon générale, les données contenues dans les étiquettes électroniques du capteur et de la solution d'étalonnage constituent des enregistrements très fiables pour l'édition des rapports de mesures.

L'invention sera de toute façon mieux comprise à l'aide de la description qui suit, en référence au dessin schématique annexé représentant, à titre d'exemples, des accessoires pour mesure ou dosage conformes à l'invention, utilisés dans diverses applications :
Figure 1 (déjà mentionnée) représente, dans son principe, une chaîne de mesure électrochimique classique ;
Figure 2 (déjà mentionnée) est un schéma de principe d'une étiquette électronique, associée à un transmetteur, utilisable dans le cadre de la présente invention ;
Figure 3 est un schéma de principe d'un système de mesure électrochimique utilisant un capteur de mesure et des solutions d'étalonnage avec étiquettes électroniques ;
Figure 4 est un schéma de principe d'un système de mesure électrochimique découlant de celui de la figure 3, mais incorporant des éléments complémentaires ;
Figure 5 illustre, très schématiquement, une autre application de la présente invention.

Sur la figure 3, qui représente un système de mesure électrochimique conforme à l'invention, les éléments communs à ceux des figures 1 et 2 (précédemment décrites) sont désignés par les mêmes repères numériques. Ce système comprend donc lui aussi, de façon générale, un capteur de mesure électrochimique 1, un convertisseur de mesure 4 et au moins une solution d'étalonnage 7.

Selon l'invention, une étiquette électronique 8 est intégrée au corps du capteur de mesure électrochimique 1, l'étiquette électronique 8 contenant notamment, dans sa mémoire, les paramètres d'étalonnage de ce capteur 1.

Dans le convertisseur de mesure 4 est incorporé un transmetteur 11, pourvu d'une antenne 12, qui communique par une liaison radio bidirectionnelle 13 avec l'étiquette électronique 8, de manière à "interroger" le capteur 1 et à "lire" ses paramètres d'étalonnage, lors de la réalisation d'une mesure, par exemple la mesure du pH d'un milieu 2 contenu dans un récipient de mesure 3.

Pour les besoins du dessin, l'antenne 12 a été représentée à l'extérieur du boîtier du convertisseur de mesure 4, mais en pratique, compte tenu de la faible distance de transmission (n'excédant pas 10 à 20 cm), cette antenne 12 pourra être facilement intégrée par exemple dans la face avant du boîtier du convertisseur 4.

La ou chaque solution d'étalonnage 7 comporte, elle aussi, une étiquette électronique 8' intégrée au récipient contenant cette solution. Lors de l'utilisation d'une solution d'étalonnage 7, le transmetteur 11 du convertisseur de mesure 4 "lit" les données contenues dans la mémoire de l'étiquette électronique 8', par une liaison radio 13'.

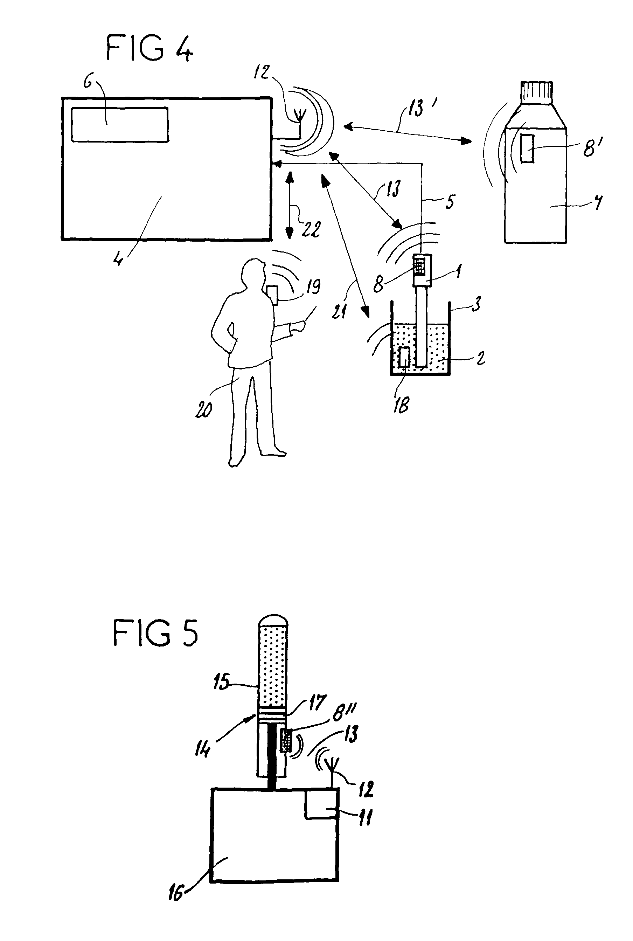

Comme l'illustre la figure 4, le système de mesure électrochimique précédemment décrit peut encore inclure les échantillons de produits à analyser et/ou le ou les opérateurs intervenant lors de la mesure. Autrement dit, des étiquettes électroniques 18 sont associées aux échantillons de produits à analyser, tels que le milieu 2 contenu dans le récipient 3, et d'autres étiquettes électroniques 19 sont encore portées par chaque opérateur 20. Comme les précédentes, ces étiquettes électroniques additionnelles communiquent, par des liaisons radio respectivement symbolisées en 21 et en 22, avec le convertisseur de mesure 4 incluant un transmetteur.

L'ensemble des informations ainsi acquises à partir des diverses étiquettes électroniques 8, 8', 18, 19 permet d'alimenter une base de données, de manière totalement fiable. En particulier, le contenu de cette base de données satisfait les exigences de traçabilité des résultats, définies par les règles de "Bonne pratique de Laboratoire", permettant de répondre à tout moment aux questions suivantes : quel résultat de mesure, pour quel échantillon, par quel opérateur et avec quel capteur à électrode, étalonné dans quelles conditions...

Comme l'illustre la figure 5, l'invention est encore applicable à un accessoire du genre seringue doseuse 14, aussi appelé "burette", qui permet le dosage précis d'un volume de réactif. Une telle seringue comporte un corps cylindrique 15 dont le diamètre intérieur est connu avec une faible incertitude, et un dispositif électromécanique avec contrôleur 16, qui permet de déplacer en translation un piston 17 dans le corps 15 avec une grande précision. Ces seringues sont utilisées avec des appareils dits "titrateurs", qui reçoivent des seringues interchangeables, afin de permettre le changement simple et rapide de réactif. Ceci pose un problème tout-à-fait similaire à celui rencontré pour les capteurs de mesure électrochimiques, et que l'on peut résoudre de manière identique, en intégrant ou attachant une étiquette électronique 8" au corps 15 de la seringue doseuse 14, comme le montre la figure 4. Dans le mémoire de l'étiquette électronique 8" sont stockées les données d'étalonnage de cette seringue doseuse 14, tenant compte des particularités du profil de ladite seringue doseuse 14. Le contrôleur 16 inclut un transmetteur 11, avec antenne 12, qui communique par liaison radio 13 avec l'étiquette électronique 8", et permet ainsi de mémoriser, dans le microprocesseur de ce contrôleur 16, les données d'étalonnage propres à chaque seringue 14 utilisée, pour piloter le mouvement du piston 17, ce qui procure une précision améliorée.

Comme il va de soi, l'invention ne se limite pas aux seules formes de réalisation décrites ci-dessus, à titre d'exemples ; elle en embrasse, au contraire, toutes les variantes de réalisation et d'application respectant le même principe. En particulier, l'on ne s'éloignerait pas du cadre de l'invention :
- en appliquant celle-ci à des capteurs de mesure autres que des capteurs électrochimiques, et nécessitant eux aussi un étalonnage, ou encore à d'autres accessoires pour mesure ou dosage ;
- en attachant l'étiquette électronique par tout moyen à l'accessoire concerné, cette étiquette n'étant pas obligatoirement intégrée dans le corps dudit accessoire ;
- en stockant toutes données complémentaires dans la mémoire de l'étiquette électronique, selon la nature de l'accessoire concerné, et en fonction de la capacité de cette mémoire.

## Revendications

1. Accessoire pour mesure ou dosage, chimique ou électrochimique, caractérisé en ce qu'il comporte une "étiquette électronique" (8, 8', 8") contenant dans sa mémoire (9) des paramètres caractéristiques d'étalonnage de cet accessoire (1, 7, 14), le contenu de cette mémoire (9) étant interrogeable sans contact, par liaison radio (13, 13'), depuis un convertisseur de mesure (4), ou autre contrôleur (16) incluant un transmetteur (11).

2. Accessoire selon la revendication 1, caractérisé en ce que cet accessoire est un capteur de mesure électrochimique (1), l'étiquette électronique (8) étant intégrée ou attachée au corps du capteur de mesure électrochimique (1) et contenant, dans sa mémoire (9), les paramètres d'étalonnage de ce capteur de mesure électrochimique (1).

3. Capteur de mesure électrochimique selon la revendication 2, caractérisé en ce que l'étiquette électronique (8) de ce capteur (1) contient dans sa mémoire (9), outre les paramètres d'étalonnage, d'autres informations choisies parmi : paramètres de production, paramètres de contrôle, historique d'étalonnage du capteur (1).

4. Accessoire selon la revendication 1, caractérisé en ce que cet accessoire est une solution d'étalonnage (7) contenue dans un récipient, l'étiquette électronique (8') étant intégrée ou attachée au récipient et contenant, dans sa mémoire (9), des informations relatives à la solution d'étalonnage (7), telles que paramètres de production, données de traçabilité, paramètres de contrôle, historique d'utilisation, une telle solution d'étalonnage (7) étant utilisable notamment en association avec un capteur de mesure électrochimique (1 ) selon la revendication 2 ou 3.

5. Système de mesure électrochimique, caractérisé en ce qu'il comprend un capteur de mesure électrochimique (1) selon la revendication 1 ou 2, au moins une solution d'étalonnage (7) selon la revendication 4, et un convertisseur de mesure (4) avec transmetteur (11) communiquant par liaison radio (13, 13'), avec les étiquettes électroniques (8, 8') du capteur (1) et de la ou chaque solution d'étalonnage (7).

6. Système de mesure électrochimique selon la revendication 5, caractérisé en ce qu'il comprend encore des étiquettes électroniques (18,19) associées aux échantillons à analyser (2,3) et/ou aux opérateurs (20), ces étiquettes électroniques (18,19) communiquant aussi, par liaison radio (21,22), avec le convertisseur de mesure (4).

7. Accessoire selon la revendication 1, caractérisé en ce que cet accessoire est une seringue doseuse (14), l'étiquette électronique (8") intégrée ou attachée à la seringue doseuse (14) contenant, dans sa mémoire (9), les données d'étalonnage de cette seringue doseuse (14), tenant compte des particularités du profil de ladite seringue doseuse (14).
